# EUROPEAN PATENT APPLICATION

(11) **EP 2 199 067 A1**
(43) Date of publication of application: **23.06.2010**
(21) Application number: 08172644.0
(22) Date of filing: 22.12.2008
(51) Int. Cl.: B29C 67/00

(54) **Additional light source**

(71) Applicant: Nederlandse Centrale Organisatie Voor Toegepast Natuurwetenschappelijk Onderzoek TNO, 2628 VK Delft (NL)
(72) Inventor: Vermeer, Adrianus Johannes Petrus Maria, 5666 BW (NL); Maalderink, Herman Hendrikus, 5673 LD Nuenen (NL)
(74) Representative: Hatzmann, Martin

(57) **Abstract**

The invention regards a method and apparatus for building a 3D model by stacking layers in a rapid prototyping or rapid manufacturing process. The method comprising the steps of providing a layer of curable material, at least partially curing at least part of an intersection pattern of the model in the layer of curable material with a first energy source so as to stabilize the at least part of the intersection pattern, removing the uncured material from the layer outside the intersection pattern and post-curing the layer with a second energy source, wherein the second energy source is a wide-range energy source.

In one aspect, the method of the invention may increase the building speed of RP and RM processes without using an expensive high power energy source.

## Description

The invention relates to the fields of rapid prototyping and rapid manufacturing.

Rapid manufacturing (RM) and rapid prototyping (RP) technologies are suitable for building 3-dimensional (3D) products by stacking layers, while imposing few restrictions on the shape of the product. Two well known RM and RP technologies are Selective Laser Sintering (SLS) and Stereo Lithography (SLA).

RM and RP technologies have in common that a pattern, i.e. an intersection pattern of the 3D product, is cured in a layer of curable material by exposing the curable material. Subsequently, a new layer of curable material is added in which another intersection pattern is cured, and so forth until the product is completed.

It is desired to speed up the existing RM and RP technologies and obtain shorter building times per product (or build larger products within the same time). One way to speed up RM and RP is to increase the power of the energy source used for exposing the curable material. A higher power allows a shorter exposure for obtaining the same degree of curing. However, high power energy sources, e.g. high power UV lasers are expensive. Furthermore, for some wavelengths, it is very difficult to obtain lasers with a higher power.

A solution known in the art to speed up the RP and RM technologies without using an expensive high power energy source is to cure the intersection pattern in two phases (EP1025981). The large spot portions of the intersection pattern are cured with a fast, low-resolution laser and the remaining small spot portions of the pattern with a slow, high resolution laser. This approach however needs two lasers, which is still quite expensive.

In one aspect, the invention provides a method to increase the building speed of RP and RM processes without using an expensive high power energy source.

### Disclosure of the invention

According to one aspect, the invention provides a method for building a 3D model by stacking layers in a rapid prototyping or rapid manufacturing process, the method comprising the steps of providing a layer of curable material, at least partially curing at least part of an intersection pattern of the model in the layer of curable material with a first energy source so as to stabilize the at least part of the intersection pattern, removing the uncured material from the layer outside the intersection pattern, post-curing the layer with a second energy source, wherein the second energy source is a wide-range energy source.

According to another aspect, the invention provides an apparatus for building a 3D model by stacking layers in a rapid prototyping or rapid manufacturing process, the apparatus comprising a stage arranged for holding the model, an applicator arranged for providing a layer of curable material to the model, a first energy source arranged for at least partially curing at least part of an intersection pattern in the layer of curable material, removing means for removing the uncured material from the layer outside the intersection pattern, and a second energy source for post-curing the layer, wherein the second energy source comprises a wide-range energy source.

The present invention will become more readily apparent from the following detailed description of the preferred embodiments of the present invention taken in conjunction with the accompanying drawings.

### Brief description of the drawings

Figure 1: Schematic representation of the method of the present invention.
Figure 2: Top view of exemplary intersection patterns.
Figure 3: Top view of exemplary raster patterns.
Figure 4: Schematic representation of an embodiment of an apparatus according to the present invention.

### Description of the embodiments

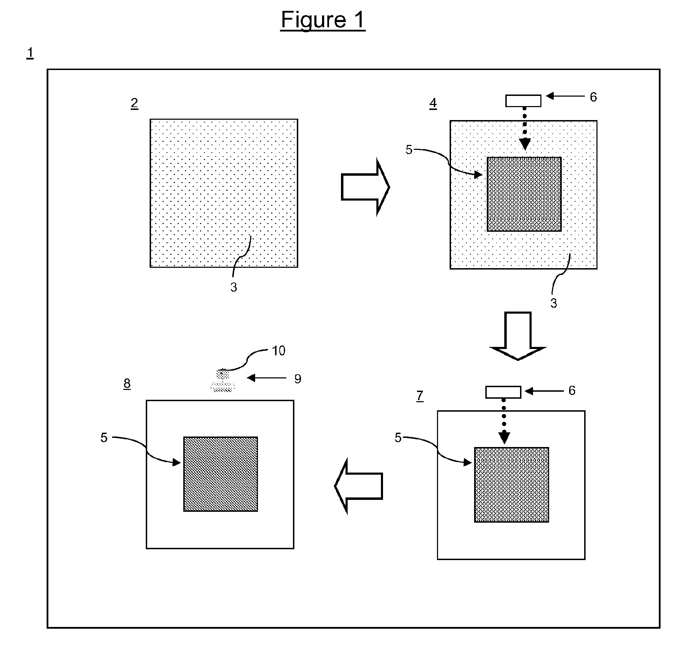

FIG. 1 schematically shows the method 1 for building a 3D model by stacking layers in a rapid prototyping or rapid manufacturing process according to the present invention. The method 1 comprises a material providing step 2 of providing a layer of curable material 3, a curing step 4 of at least partially curing at least part of an intersection pattern 5 of the model in the layer of curable material 3 with a first energy source 6, so as to stabilize the at least part of an intersection pattern 5, a removing step 7 of removing the uncured material from the layer outside the intersection pattern and a post-curing step 8 of post-curing the layer with a second energy source 9, wherein the second energy source 9 is a wide-range energy source 10.

The method 1 comprises providing a layer of curable material 3, which may be done in several ways.
The 3D model may be built in a basin filled with liquid, the model being positioned just below the surface. The liquid above the model forms the layer of uncured material in which the intersection pattern 5 is to be cured. After curing, the model is sunk slightly into the liquid (or the surface level of the liquid is raised) to provide a new layer of curable material 3.
Another way of providing a layer of curable material 3 is by adding a layer on top of the 3D model in e.g. powder form.

As used herein, the term 'curable material' includes any material which is curable (i.e., which can by polymerized and/or cross-linked) by UV light, a laser, ionizing radiation (including but not limited to an electron beam, gamma rays or x-rays), or a combination of any of the foregoing. The term 'curable material' shall also be construed to mean a composite material comprising a mixture of both curable and non-curable materials, such as a resin in which fibres and/or fillers are intermixed.

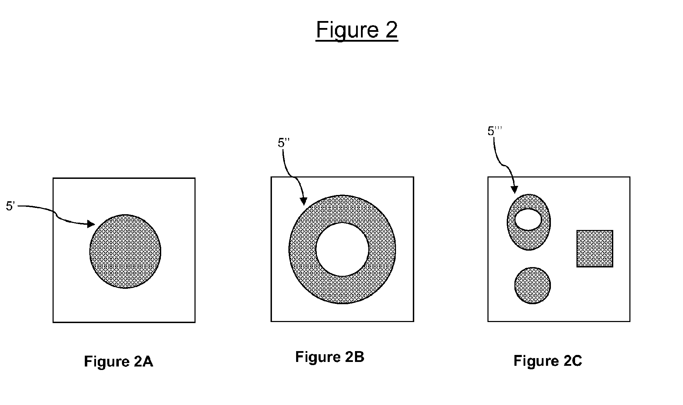

After having provided the layer of curable material 3, at least part of an intersection pattern % of the model is at least partially cured in the layer of curable material 3 with a first energy source 6, so as to stabilize the at least part of the intersection pattern 5. In RP and RM, the 3D model is built by stacking layers in which an intersection pattern is cured. Examples of intersection patterns are shown in FIG. 2. FIG. 2A shows a layer with a circular intersection pattern, FIG. 2B a layer with a hollow circular intersection pattern 5, which illustrates that an intersection pattern need not be completely filled, and FIG. 2C shows a distributed intersection pattern, illustrating that an intersection pattern may comprise a number of unconnected area's.

At least partially curing at least part of the intersection pattern may increase the speed of RP and RM processes without increasing the power of the energy source. Instead of fully curing the complete intersection pattern in one step, the curing is done in two steps. First, at least part of the intersection pattern is at least partially cured by a first energy source 6, e.g. a laser; subsequently the intersection pattern is post-cured with a second energy source 9. By using an efficient and fast second energy source 9 the total time for executing the two steps is less than the time for fully curing the complete intersection pattern 5 in one step.

Partially curing comprises curing to such a degree that the intersection pattern remains stable while removing the uncured material from the layer outside the intersection pattern. The curable material is not fully cured, but only to such an extent that the material is sufficiently stabilized that it is not removed with the uncured material during the step of removing the uncured material outside the intersection pattern.

In the method 1 according to the present invention, the extra energy needed for fully curing is provided in a post-curing step 8 in a cost-effective way by a wide-range energy source 10. The use of a wide-range energy source 10 is feasible because the uncured material outside the intersection pattern is removed first.

Fully curing an intersection pattern needs a certain exposure time. Partially curing the intersection pattern means curing the pattern to a lower degree. When the energy source operates at the same power with which the full curing is done, the exposure may be shorter and the speed of the RM and RP processes increases.

The transition of a resin cured by UV from liquid to solid passes a so-called gel-point. At this point all monomers are chemically bonded to form one big molecule. More curing forms more bonds, e.g. cross links, to realize a higher E-modulus of the material. The degree of curing desired in partially curing may be defined by curing the curable material to a degree on or near the gel-point degree of the material, where the intersection pattern remains stable while removing the uncured material from the layer outside the intersection pattern. In practice, curing to a degree on or near the gel-point degree may be interpreted as a degree within a range of 80% - 120% of the gel-point degree.

This gel-point degree of curing p_{c} is defined by the formula p_{c} = 2 / f_{avg}. In this formula, f_{avg} is the parameter average 'functionality' related to the number of chemical bonds per monomer, a property of the resin. Typically, values of f_{avg} are in the range of 3 to 6. This means the gel-point is reached at a curing degree p_{c} between 2/3 and 1/3.

The curing degree used for regular production may be 0.9. The potential productivity gain by partially curing may then be between 35% and 170%. A characteristic of typical curable materials that are used in RP and RM is that they may be partially cured up to a certain degree and if energy is provided within a certain time after the partial curing, this energy will add up to the energy for the partial curing until the material is fully cured. The energy provided during the partial curing is not lost, or is at least substantially preserved.

Curing at least part of the intersection pattern comprises fully curing, as opposed to the partially curing being described above, a raster pattern 11 in the layer of curable material 3, said raster pattern 11 being dimensioned to hold uncured material. The material may thus be fully cured, but only a raster pattern 11 is cured instead of the complete intersection pattern.

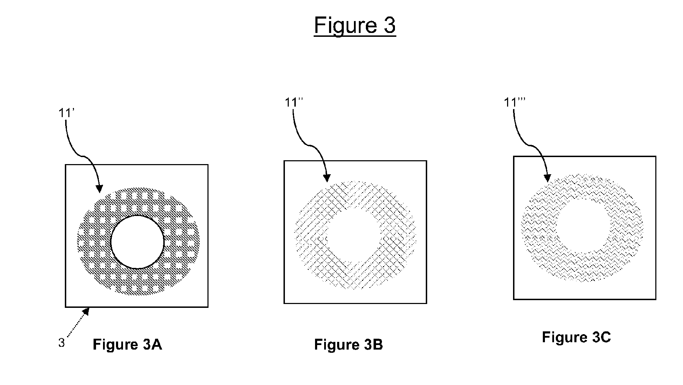

FIG. 3 illustrates different types of raster patterns 11, all of them representing a hollow circular intersection pattern. FIG. 3A shows a layer of curable material 3 with an orthogonal raster pattern 11', FIG. 3B shows a diamond shaped raster pattern 11" and FIG. 3C a wave shaped raster pattern 11"'. Different types of energy sources may benefit from different raster pattern designs.

The amount of material that has to be exposed for curing a raster pattern 11 is less than for curing the complete intersection pattern. A laser source may e.g. travel a shorter path, which increases the RP and RM speed.

A combination of partially curing and curing at least part of an intersection pattern, e.g. curing a raster of the intersection pattern to a certain degree only, is also possible. This may further speed up the RP and RM process.

Before post-curing the intersection pattern with a wide-range energy source 10, the uncured material outside the intersection pattern is removed from the layer after at least partially curing at least part of the intersection pattern. This is schematically shown in the removing step 7 in FIG. 1.

One way of removing the uncured material outside the intersection pattern is to blow the material away. This way is especially suitable when the uncured material has a dry, powder like structure or is a low viscosity liquid.

Removing the uncured material will typically remove both the material inside the raster pattern 11 and outside the raster pattern 11. For a solid 3D model, solid or in other words filled intersection patterns are desired and therefore uncured material is desired inside the raster pattern 11.

One possibility to hold uncured material inside the raster pattern 11 during the step of removing the uncured material may be realised by dimensioning the raster pattern 11 to provide capillaries for holding the uncured material. When using the mechanism of capillarity, the dimensions of the raster are e.g. related to the viscosity of the uncured material.

Another possibility to hold uncured material inside the raster pattern 11 during the step of removing the uncured material is to provide additional material inside the raster pattern 11 after having first removed substantially all the uncured material from the layer. This introduces an extra process step. However, it also creates the opportunity to fill the object with an additional material that differs from the curable material of the layer if the required characteristics of the surface of the model differ from the characteristics of the inside. The surface may e.g. be smooth or soft, while the inside is desired to be light or rigid. The additional material may be sticky to hold the material inside the raster pattern 11.

After at least partially curing at least part of the intersection pattern and removing the uncured material outside the raster pattern 11, the layer is post-cured with a wide-range energy source 10. This is schematically shown in the post-curing step 8 in FIG.1. One characteristic of a wide-range energy source 10 is that the energy is provided over a wider range of the layer 3, i.e. a range which typically is several orders, for example, at least more than 5, or preferably more than 10, or even more preferably more than 10^4 times a pixel resolution, which pixel resolution could be for example in a micrometer range, for example, 50 micrometers. In this wide range, preferably, a substantially uniform power is provided. Typically, such a wide range source can be provided by a wide-angled source. In case of a light source, the light intensity may be substantially independent of the incident angle of the light over at least part of the layer. The wide-range energy source 10 is typically a wide-range UV light source, for example, but not restricted to, a UV TL light source. However, the use of a wide-range thermal source is also contemplated.

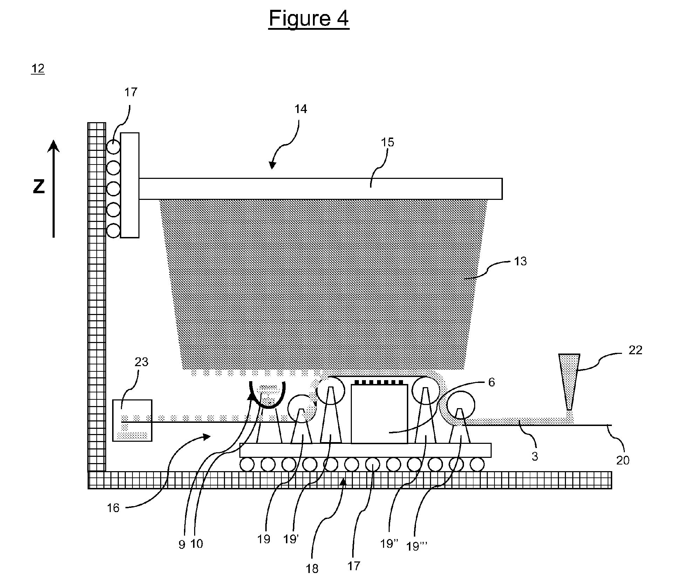

FIG. 4 shows an embodiment of an apparatus 12 for building a 3D model by stacking layers in a rapid prototyping or rapid manufacturing process according to the present invention. The apparatus 12 comprises a stage 14 for holding the model. In this embodiment, the stage 14 is a movable z-stage 15 that may be moved in a z-direction before the applicator 16 provides a layer of curable material to the model. With z-direction the direction transverse to the layer of curable material is meant. The stage 14 may be raised while the applicator 16 is not moving, but it is also possible to lower the applicator 16 as long as the distance between the model 13 and the applicator 16 is increased. In this embodiment, rolling elements 17 enable movement of the z-stage 15.

FIG. 4 shows that the model 13 is connected under the z-stage 15 and that a new layer is stacked from below. For sake of clarity, the layer of curable material is shown with an exaggerated thickness.

The apparatus 12 comprises an applicator 16 for providing a layer of curable material to the model 13. The apparatus 12 further comprises removing means for removing the uncured material from the layer outside the intersection pattern. In the embodiment of FIG. 4, the applicator 16 is arranged for both providing a layer of curable material to the model 13 and for removing the uncured material from the layer outside the intersection pattern. This is convenient but alternatives for removing the uncured material from the layer outside the intersection pattern are possible, e.g. removing the uncured material with a blower. This is especially suitable when the uncured material has a dry, powder like structure or is a low viscosity liquid.

In this embodiment the applicator 16 comprises a movable foil guiding stage 18. The foil guiding stage 18 is movable transverse to the z-direction. The movement of the foil guiding stage 18 is enabled by rolling elements 17. Other ways of moving, like sliding are also possible. The foil guiding stage 18 further comprises foil guiding elements 19, 19', 19" and 19"' protruding from the stage 18 for guiding a foil 20 along the model 13 so as to apply a layer of curable material to the model 13. In this case, the foil guiding elements 19 comprise four rollers 21.

In the embodiment illustrated in FIG. 4, the foil 20 is arranged for carrying the curable material supplied from a supply reservoir 22 to the model 13 and for carrying the removed uncured material from the model 13 to a residue reservoir 23. Typically, the uncured material outside the intersection pattern sticks to the moving foil 20 because the adhesive force between the uncured material and the foil 20 are larger than the adhesive force between the uncured material and the model 13.

The applicator 16 further comprises a supply reservoir 22 for storing the curable material and a residue reservoir 23 for storing the uncured material removed from the layer outside the intersection pattern. The reservoirs may be open or closed. Open may have the advantage that filling or emptying is easier. In a closed reservoir, keeping the curable material under certain operating conditions before using or recycling it may be easier. In this embodiment, the foil 20 is arranged for carrying the curable material supplied from the supply reservoir 22 to the model 13 and for carrying the removed uncured material from the model 13 to the residue reservoir 23. In this embodiment, the applicator 16 comprises an actuator (not shown) for moving the foil 20.

The foil 20 and the foil guiding stage 18 may be moved independently. In one operating mode, in a first step, the foil 20 is moved so as to provide a layer of curable material beneath the model 13. The curable material is, at that time, not yet in contact with the model 13. In a second step, the foil guiding stage 18 moves along the model 13 to apply the layer of curable material to the model 13, expose the curable material and remove the uncured material. In the second step, the foil 20 does not substantially move relative to the model 13 transverse to the z-direction.

The apparatus 12 according to the present invention comprises a first energy source 6 arranged for at least partially curing at least part of an intersection pattern in the layer of curable material 3. In the embodiment of FIG. 4 the first energy source 6 comprises a plurality of individually operable LED's arranged in rows and columns (not shown). The first energy source 6 may be moveably disposed below the layer of curable material 3, such that it can move in a direction 8 parallel to the layer of curable material 3. The motion of the first energy source 6 may be controlled by a controller, which also controls the lighting of the LEDs. In use, the first energy source 6 may be moved rectilinearly in a direction that extends at an angle with the directions of the rows and columns of the LED array 32 to enhance the effective resolution of the system. This technique is described in more detail in copending application EP 07150447.6 in the name of applicant, which is incorporated herein by reference for further information regarding this aspect. The first energy source 6 is positioned on the movable foil guiding stage 18, between the protruding foil guiding elements 19 so as to expose the layer of uncured material through the foil 20. The energy source may be covered by a transparent plate, e.g. a glass plate to improve the guidance of the foil 20.

The combination of using a LED light source comprising a plurality of individually operable LED's and partially curing at least part of the intersection pattern may be advantageous. Before explaining this further, the LED light source as used in this embodiment will be described in some detail.

The LED light source comprises a two dimensional matrix of typically 80 x 120 light emitting diodes (LED's); that are image via a multilens array (not shown) to the layer of curable material 3. The length of the matrix is typically 60 centimetres. The LED's are individually operable to write the intersection pattern with a control speed of an individual LED typically in the order of nanoseconds, by a plurality of electrical pathways, selectively connected to the respective LEDs. In this example, accordingly, the first energy source 6 is provided by a two-dimensional array of LEDs extending in a plane parallel to the layer of curable material 3, and in between the multi-lens-array and the substrate.
When the method 1 of the present invention is not used, in other words, when the complete intersection pattern is fully cured, the LED light source typically moves over the layer of uncured material with a scanning speed of 10 centimeters per second.

To what extent does the method 1 of the present invention speed up RP and RM processes when using the LED light source as described above? Here a difference must be made between 1) partially curing the intersection pattern, i.e. curing the intersection pattern to a certain degree instead of fully curing and 2) curing only part of the intersection pattern, i.e. a raster pattern instead of curing a the complete intersection pattern.

First, why does partially curing the intersection pattern speed up RP and RM processes? Fully curing an intersection pattern needs a certain exposure time. Partially curing the intersection pattern means curing the pattern to a lower degree. When the energy source operates at the same power with which the full curing is done, the exposure may be shorter and the speed of the RM and RP processes increases. This has been explained above.

Second, why does the speed increase due to curing a raster pattern instead of a complete intersection pattern?
When curing a raster pattern, the amount of material that has to be exposed is less than when curing a complete intersection pattern. Using a laser, this directly leads to an increase of speed. However, when the first energy source 6 is a LED light source, this is not the case, since the light source still has to be moved over the whole layer of curable material 3 in order to expose the pattern. An advantage of curing a raster pattern is that the individual LED has, on average a shorter duty cycle. Does this increase the speed of the RP and RM processes? Not immediately. However, when LED's have a shorter duty cycle, they may operate at a higher power while on duty.

To understand this, some knowledge of LED's may be useful. Due to failure of a LED when exceeding a critical thermal load, a LED has a predetermined optical output power with which it may operate continuously without failing. A further characteristic of a LED is that it may operate with a higher output than the 'continuous output' for some time, provided the LED will not operate or operate with an output power lower than the 'continuous output' some time after that.

Curing a raster pattern instead of a complete intersection pattern, enables to alternately put the individual LED's on and off duty. An estimate based on actual data from industrial available LED's is that when the duty cycle is reduced with a factor two, the power during 'on-state' may increase by 90%. As we have seen, exposing the curable material with a higher power allows a shorter exposure for obtaining the same degree of curing. This may increase the scanning speed up to 19 centimeters per second.

Combining both effects, i.e. curing a raster pattern to half the degree of fully curing only may lead to a further increase of the scanning speed.

In the above it is shown that the method 1 of the present invention may lead to a speed increase. On top of that, the raster patterns may be further optimized for improving the on and off duty sequence of the individual LED's of the LED light source. This may further improve the output power of the LED's and the building speed.
In one aspect, the optimization regards the raster design.
In another aspect, the optimization regards the position and orientation of the 3D model 13 on the z-stage 15. The orientation of the model 13 may be further improved by rotating the z-stage 15. To enable a rotation, in one embodiment of the apparatus 12 according to the present invention the z-stage 15 comprises a rotatable part (not shown) for rotatably connecting the model 13 so as to optimize the on and off duty sequence of the individual LED's. The model 13 may even be rotated during the manufacturing process to provide an optimal raster pattern in every layer. In this embodiment, the applicator 16 completely passes the lower surface of the model 13 and at one moment, the model 13 is free from the applicator 16 and the model 13 may be rotated at that moment. It is even contemplated to rotate the object during the curing of a raster pattern.
In yet another aspect, the optimization regards illuminating the intersection pattern with only a part of the LED's in the matrix and not with all the LED's in the matrix, and vary the part of the LED's that illuminate the intersection pattern in time.

After the uncured material has been removed outside the intersection pattern, the layer is post-cured. The apparatus 12 according to the present invention comprises a second energy source 9 for post-curing the layer, wherein the second energy source 9 comprises a wide-range energy source 10. In the embodiment of FIG. 4 the wide-range energy source 10 comprises at least one wide-range UV light source and is positioned on the movable foil guiding stage 18 for post-curing the layer. An alternative wide-range energy source 10 may be a thermal source. More than one, e.g. two wide-range UV light sources may be used when an intersection pattern is cured both when the applicator 16 moves to the left and when the applicator 16 moves to the right. The post-curing wide-range light source must be positioned on the foil guiding stage 18 such that the layer is post-cured after the first energy source 6 has exposed the at least part of the intersection pattern. Another option is to connect the wide-range light source movably on the foil guiding stage 18 and move the light source depending on whether the foil guiding stage 18 is moving back or forth.

The apparatus 12 may comprise a filler (not shown) for filling additional curable material inside the raster pattern, as has been explained above.

The detailed drawings, specific examples and particular formulations given serve the purpose of illustration only. The apparatus 12 described, is configured to build the model 13 upside down. It is however also possible to use the method 1 according to the present invention with apparatuses for conventional RP and RM techniques like Selective Laser Sintering (SLS) and Stereo Lithography (SLA). Furthermore, other substitutions, modifications, changes, and omissions may be made in the design, operating conditions, and arrangement of the exemplary embodiments without departing from the scope of the invention as expressed in the appended claims.

## Claims

1. A method for building a 3D model by stacking layers in a rapid prototyping or rapid manufacturing process, the method comprising the steps of:
- providing a layer of curable material (3);
- at least partially curing at least part of an intersection pattern (5) of the model in the layer of curable material (3) with a first energy source (6) so as to stabilize the at least part of the intersection pattern (5);
- removing the uncured material from the layer outside the intersection pattern (5);
- post-curing the layer with a second energy source (9), wherein the second energy source (9) is a wide-range energy source (10).

2. The method according to claim 1, wherein partially curing the curable material comprises curing the material to a degree near the gel-point degree of the material, where the intersection pattern (5) remains stable while removing the uncured material from the layer outside the intersection pattern (5).

3. The method according to claim 1, wherein the curing of at least part of the intersection pattern (5) comprises the curing of a raster pattern (11) in the layer of curable material (3), said raster pattern (11) being dimensioned to hold uncured material.

4. The method according to claim 3, wherein the raster pattern (11) is dimensioned to provide capillaries for holding the uncured material.

5. The method according to claim 3 , wherein additional curable material is provided inside the raster pattern (11).

6. An apparatus (12) for building a 3D model (13) by stacking layers in a rapid prototyping or rapid manufacturing process, the apparatus (12) comprising:
- a stage (14) arranged for holding the model (13),
- an applicator (16) arranged for providing a layer of curable material (3)to the model (13),
- a first energy source (6) arranged for at least partially curing at least part of an intersection pattern in the layer of curable material (3),
- removing means for removing the uncured material from the layer outside the intersection pattern, and
- a second energy source (9) for post-curing the layer, wherein the second energy source (9) comprises a wide-range energy source (10).

7. The apparatus according to claim 6, wherein the stage (14) for holding the model (13) is a movable z-stage (15) for moving the model (13) in a z-direction before providing the layer of curable material (3).

8. The apparatus according to claim 6, wherein the applicator (16) is arranged for providing a layer of curable material (3) to the model (13), and for removing the uncured material from the layer outside the intersection pattern.

9. The apparatus according to claim 8, wherein the applicator (16) comprises a movable foil guiding stage (18), said foil guiding stage (18) being movable transverse to the z-direction, said foil guiding stage (18) comprising foil guiding elements (19) protruding from the stage (18) for guiding a foil (20) along the model (13) so as to apply a layer of curable material (3) to the model (13).

10. The apparatus according to claim 9, wherein the foil (20) is arranged for carrying the curable material supplied from a supply reservoir (22) to the model 13 and for carrying the removed uncured material from the model (13) to a residue reservoir (23), the applicator (16) further comprising
- a supply reservoir (22) arranged for storing the curable material,
- a residue reservoir (23) arranged for storing the uncured material removed from the layer outside the intersection pattern,
- an actuator arranged for moving the foil (20).

11. The apparatus according to claim 9, wherein the first energy source (6) is positioned on the movable foil guiding stage (18), between the protruding foil guiding elements (19) so as to expose the layer of uncured material through the foil (20).

12. The apparatus according to claim 9, wherein the wide-range energy source (10) is positioned on the movable foil guiding stage (18) for post-curing the layer.

13. The apparatus according to anyone of claims 6 - 12, wherein the first energy source (6) comprises a plurality of individually operable LED's.

14. The apparatus according to anyone of claims 6 - 12, wherein the wide-range energy source (10) comprises at least one wide-range UV light source.

15. The apparatus according to claim 13, wherein the z-stage (15) comprises a rotatable part for rotatably connecting the model (13) so as to optimize the on and off duty sequence of the individual LED's.
